# EUROPEAN PATENT SPECIFICATION

(11) **EP 0 800 057 B1**
(45) Date of publication and mention of the grant of the patent: **19.03.2003**
(21) Application number: 97105463.0
(22) Date of filing: 02.04.1997
(51) Int. Cl.: G01C 19/56

(54) **Vibrating gyroscope**
Vibrationskreisel
Gyroscope à vibration

(30) Priority: 04.04.1996 JP 8250496
(43) Date of publication of application: 08.10.1997
(73) Proprietor: MURATA MANUFACTURING CO., LTD., Nagaokakyo-shi Kyoto-fu 226 (JP)
(72) Inventor: Ishitoko, Nobuyuki, Nagaokakyo-shi, Kyoto-fu (JP); Fujimoto, Katsumi, Nagaokakyo-shi, Kyoto-fu (JP); Tabuchi, Makoto, Nagaokakyo-shi, Kyoto-fu (JP)
(74) Representative: Schoppe, Fritz, Dipl.-Ing.

(56) References cited:
- EP-A- 0 585 785
- EP-A- 0 685 704
- PATENT ABSTRACTS OF JAPAN vol. 018, no. 175 (P-1716), 24 March 1994 & JP 05 340759 A (MURATA MFG CO LTD), 21 December 1993
- PATENT ABSTRACTS OF JAPAN vol. 018, no. 505 (P-1803), 21 September 1994 & JP 06 174474 A (MURATA MFG CO LTD), 24 June 1994
- PATENT ABSTRACTS OF JAPAN vol. 095, no. 011, 26 December 1995 & JP 07 208997 A (FUJITSU TEN LTD), 11 August 1995
- PATENT ABSTRACTS OF JAPAN vol. 095, no. 008, 29 September 1995 -& JP 07 131280 A (TOYOTA MOTOR CORP;OTHERS: 01), 19 May 1995

## Description

The present invention relates generally to vibrating gyroscopes. More particularly, the invention is concerned with a vibrating gyroscope applicable to a navigation system which locates a mobile unit by detecting, for example, a rotational angular velocity, so as to perform a suitable navigational operation, or to a vibration-isolating system, such as a shake-preventing device, which detects a rotational angular velocity caused by external vibrations, such as shaking by hand, to suitably isolate vibrations.

EP-A-0685704 relates to a vibrating gyroscope having a vibrating body formed of two piezoelectric plates connected to each other via a dummy electrode. Four supporting members are provided to support the vibrating body and are connected to the dummy electrode at both sides of the vibrating body in the vicinity of nodal points thereof.

In Patent Abstracts of Japan, Vol. 018, No. 175, March 24, 1994 and JP 05340759 A, a vibrating gyroscope having a trigonal prism-shaped vibrator is disclosed. Piezoelectric elements are formed on the side surfaces of the vibrator. Four support members are provided to support the vibrator, three of which form connections to a respective piezoelectric element.

EP-A-0585785 relates to a vibrating gyroscope including a triangular vibrating body. Four support pins are provided to support the vibrating body in the vicinity of nodal points thereof.

In Patent Abstracts of Japan, Vol. 018, No. 505, September 21, 1994 and JP 06174474 A, a vibrating gyroscope having a triangular prism-shaped vibrator is disclosed. Piezoelectric elements are formed on the side surfaces of the vibrator. Two supporting structures are provided each of which is connected to a ridge line of the vibrator in the vicinity of a nodal point thereof.

Similarily, in Patent Abstracts of Japan, Vol. 095, No. 011, December 26, 1995 and JP 07208997 A, a vibrating gyroscope having a triangular prism-shaped vibrator and two supporting structures are provided each of which is connected to a ridge line of the vibrator in the vicinity of a nodal point thereof. A plurality of curved parts are provided between the respective supporting point of the vibrator and first and second leg parts of the supporting structures to prevent the occurence of a change in characteristics due to abnormal acceleration caused by a drop test.

In Patent Abstracts of Japan, Vol. 095, No. 011, September 29, 1995 and JP 07131280 A, a vibrator and a support structure for the vibrator are formed in a single plate. The support structure comprises four bent legs connected to respective nodal points of the vibrator and a supporting frame formed in the single plate.

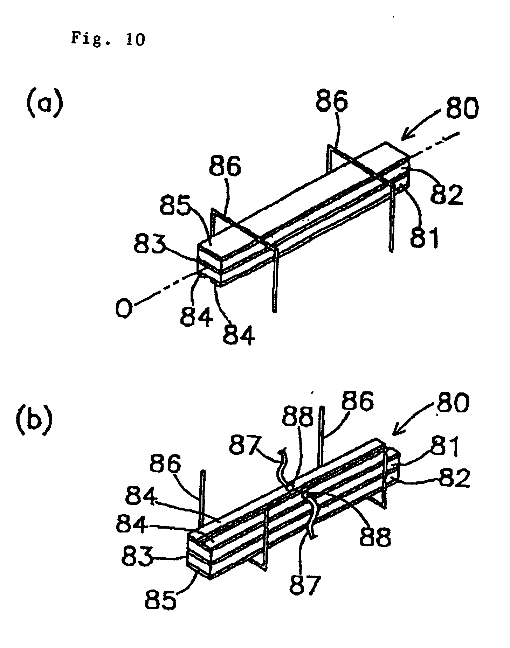

The construction of another type of gyroscope will now be explained with reference to Fig. 10.

Referring to Figs. 10A and 10B, a gyroscope has a vibrator generally designated by 80. The vibrator 80 is formed by, for example, laminating and bonding a first piezoelectric substrate 81 and a second piezoelectric substrate 82, both formed in a strip-like shape, across a dummy electrode 83. The first and second piezoelectric substrates 81 and 82 are polarized along their thickness dimensions in opposite directions. Alternatively, the substrates 81 and 82 may be polarized in directions opposedly facing each other. Moreover, two divided electrodes 84, 84 are formed on the main surface of the first piezoelectric substrate 81 with a spacing in the widthwise direction of the substrate 81, while a common electrode 85 is formed on the main surface of the second piezoelectric substrate 82.

As described above, the first and second piezoelectric substrates 81 and 82 of the vibrator 80 are polarized in opposite directions. Thus, upon application of a drive signal, for example, a sine-wave signal, between each of the divided electrodes 84, 84 and the common electrode 85, the substrates 81 and 82 are caused to vibrate in a bending manner in the direction orthogonal to the main surface of the substrates 81 and 82 while using a portion further inward from both ends of the longitudinal substrates 81 and 82 as a node. The directions of vibration of the first and second piezoelectric substrates 81 and 82 are opposite to each other. Then, the vibrating gyroscope is rotated about the center axis O of the vibrator 80 to generate a rotational angular velocity, so that a Coriolis force acts upon the vibrator 80 in accordance with the angular velocity. Due to this Coriolis force, the vibrator 80 changes its direction of vibration so as to generate a signal between the divided electrodes 84, 84 in accordance with the angular velocity. The rotational angular velocity can thus be detected based on this signal.

Two support pins 86, 86 serving as support members are attached to the vicinity of the node of the vibrator 80. The support pins 86, 86, which are formed by molding metal in a "U" shape, are soldered at their central portions to the common electrode 85 of the vibrator 80, and are also inserted at both ends into holes formed in a substrate (not shown). Accordingly, the vibrator 80 can be supported while floating above the substrate. The support pins 86, 86 are also used to connect the common electrode 85 to an oscillation circuit or a drive circuit (neither of which are shown). Further, leads 87, 87 are provided to connect the divided electrodes 84, 84 to an oscillation circuit or a drive circuit; one end of each lead 87 is bonded to the corresponding divided electrode 84 by means such as solder 88.

As noted above, in the above type of gyroscope, it is required that the leads 87, 87 be soldered to the divided electrodes 84, 84 of the vibrator 80, thereby making the assembly operation complicated.

Accordingly, it is an object of the present invention to provide a vibrating gyroscope in which the divided electrodes for use in the vibrator can be connected to a circuit without requiring leads.

This object is achieved by vibrating gyroscopes according to claim 1, 9 or 10.

In order to achieve the above object, according to the present invention, there is provided a vibrating gyroscope comprising: a vibrator including a first piezoelectric substrate polarized in the thickness direction of the substrate, a second piezoelectric substrate laminated on the first piezoelectric substrate and polarized in a direction opposite to the direction in which the first piezoelectric substrate is polarized, two divided electrodes formed on the main surface of the first piezoelectric substrate, and a common electrode formed on the main surface of the second piezoelectric substrate; and first, second and third support pins for supporting the vibrator, wherein the first support pin is fixed to one of the two divided electrodes, while the second support pin is fixed to the other divided electrode, and the third support pin is fixed to the common electrode.

In the above-described gyroscope, the first through third support pins may be each provided with a bent portion.

With this arrangement, the support pins are used to establish electrical connection of the divided electrodes of the vibrator with external circuits. This can obviate the need for the provision of leads for the divided electrodes, thereby decreasing the number parts and further facilitating the assembly operation. Moreover, the support pins, which are provided with bent portions, are deformed in response to vibrations of the vibrator occurring in directions orthogonal to the longitudinal direction of the vibrator. Accordingly, the vibrations of the vibrator can be stabilized without being suppressed by the support pins.

Other features and advantages of the present invention will become apparent from the following description of the invention which refers to the accompanying drawings.

### BRIEF DESCRIPTION OF THE DRAWINGS

Fig. 1 illustrates a vibrating gyroscope according to a first embodiment of the present invention;
Fig. 2 is a perspective view of a vibrator for use in the gyroscope shown in Fig. 1: Fig. 2A illustrates the vibrator mounted on a substrate as viewed from the top; and Fig. 2B illustrates the vibrator as viewed from the bottom;
Fig. 3 is a perspective view of a vibrator for use in a vibrating gyroscope according to a second embodiment of the present invention;
Fig. 4 is a perspective view of a vibrator for use in a vibrating gyroscope according to a third embodiment of the present invention: Fig. 4A illustrates the vibrator as viewed from the top; and Fig. 4B illustrates the vibrator as viewed from the bottom;
Fig. 5 is a top view of the vibrator shown in Fig. 4: Fig. 5A illustrates a state in which the vibrator is not vibrating; and Figs. 5B and 5C illustrate states in which the vibrator vibrates in directions orthogonal to the longitudinal direction of the vibrator;
Fig. 6 is a top view of an example of modifications to the vibrator shown in Fig. 4;
Fig. 7 is a top view of another example of modifications to the vibrator shown in Fig. 4;
Fig. 8 is a top view of still another example of modifications to the vibrator shown in Fig. 4;
Fig. 9 is a perspective view illustrating the essential portion of a further example of modifications to the vibrator shown in Fig. 4; and
Fig. 10 is a perspective view of a vibrator for use in a known type of gyroscope: Fig. 10A illustrates the vibrator as viewed from the top; and Fig. 10B illustrates the vibrator as viewed from the bottom.

### DESCRIPTION OF THE PREFERRED EMBODIMENTS

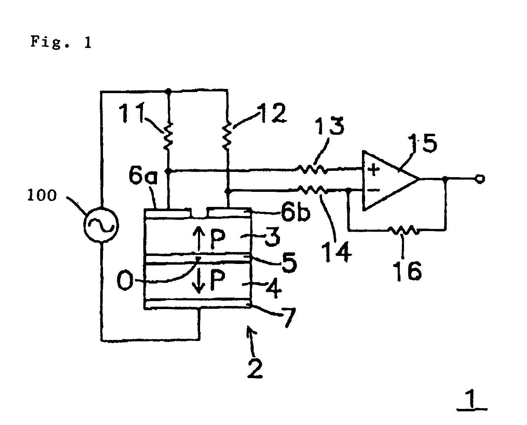

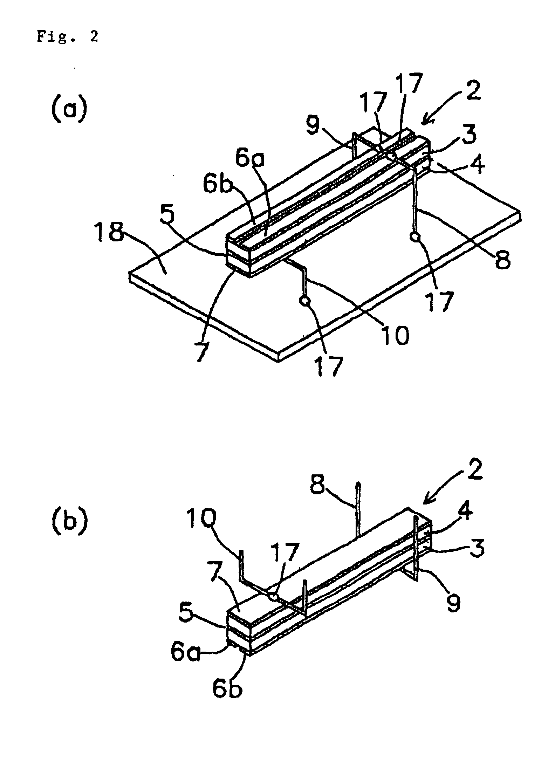

A first embodiment of the present invention will now be described while referring to Figs. 1 and 2.

A reference will first be made to Fig. 1. A vibrating gyroscope 1 has a vibrator generally indicated by 2. The vibrator 2 is formed by, for example, laminating a first piezoelectric substrate 3 and a second piezoelectric substrate 4, both formed in a strip-like shape, across a dummy electrode 5 and by further bonding the substrates 3 and 4 with, for example, an adhesive. The first and second piezoelectric substrates 3 and 4 are polarized along their thickness dimensions in opposite directions, as indicated by the arrows P in Fig. 1. Alternatively, the substrates 3 and 4 may be polarized in directions opposedly facing each other. Moreover, two divided electrodes 6a and 6b are formed on the main surface of the first piezoelectric substrate 3 with a spacing in the widthwise direction of the substrate 3, while a common electrode 7 is disposed on the main surface of the second piezoelectric substrate 4. Further, an oscillation circuit 100 acting as drive means is connected at one output terminal to the divided electrodes 6a and 6b through resistors 11 and 12, respectively, and at the other output terminal to the common electrode 7. Moreover, the divided electrodes 6a and 6b are respectively connected through resistors 13 and 14 to the non-inverting input terminal and the inverting input terminal of a differential amplifying circuit 15 serving as detection means. A resistor 16 is connected between the output terminal and the inverting input terminal of the differential amplifying circuit 15.

In the gyroscope 1 constructed as described above, a drive signal, such as a sine-wave signal, output from the oscillation circuit 100 is applied to the divided electrodes 6a and 6b of the vibrator 2 across the resistors 11 and 12, respectively, so that the first and second piezoelectric substrates 3 and 4 are caused to vibrate in a bending manner in directions orthogonal to the main surfaces of the substrates 3 and 4. Then, the gyroscope 1 is rotated around the center axis O of the vibrator 2 to produce a rotational angular velocity, so that a Coriolis force acts upon the vibrator 2 in the direction parallel to the main surfaces of the first and second piezoelectric substrates 3 and 4 and also in the direction orthogonal to the center axis O of the vibrator 2. Due to this Coriolis force, the vibrator 2 changes its direction of vibration to generate a signal between the divided electrodes 6a and 6b in accordance with the angular velocity. This signal is detected by the differential amplifying circuit 15 through the resistors 13 and 14, and further, the rotational angular velocity can thus be detected based on a signal output from the differential amplifying circuit 15.

The vibrator 2 is supported, as illustrated in Figs. 2A and 2B, by first, second and third support pins 8, 9 and 10 formed by molding metal. Among the three support pins 8, 9 and 10, the first support pin 8 is formed generally in an "L" shape and is bonded at one end to the vicinity of the node on the divided electrode 6a of the vibrator 2 by means such as solder 17a. The second support pin 9 is also formed generally in an "L" shape and is attached at one end to the vicinity of the node on the divided electrode 6b by means such as solder 17b. Further, the third support pin 10 is formed generally in a "U" shape and is bonded at its intermediate point to the vicinity of the node on the common electrode 7 by means such as solder 17c. Then, the other ends of the first and second support pins 8 and 9 and both ends of the third support pin 10 are inserted into holes (not shown) formed in a substrate 18 and fixed by means such as solder 17. Thus, the vibrator 2 can be held while floating above the substrate.

If an elastic material, such as silicon resin (not shown), is applied to the solder 17, it can absorb vibrations of the vibrator 2. This can inhibit propagation of the vibrations, which is referred to as "vibration leakage", to the substrate 18 through the support pins 8, 9 and 10, thereby stabilizing the vibrations of the vibrator 2.

In the gyroscope 1 discussed above, the first and second support pins 8 and 9 are used to support the vibrator 2 in cooperation with the third support pin 10. At the same time, the pins 8 and 9 are electrically connected to the divided electrodes 6a and 6b and are also coupled to the oscillation circuit 100 and the differential amplifying circuit 15. In contrast, the third pin 10 is electrically connected to the common electrode 7 and is also coupled to the oscillation circuit 100. In this manner, electrical connection of the divided electrodes 6a and 6b with the oscillation circuit 10 and the differential amplifying circuit 15 can be established through the first and second support pins 8 and 9, which eliminates the need for providing leads for the divided electrodes 6a and 6b. This decreases the number of parts, and thus simplifies the assembly operation.

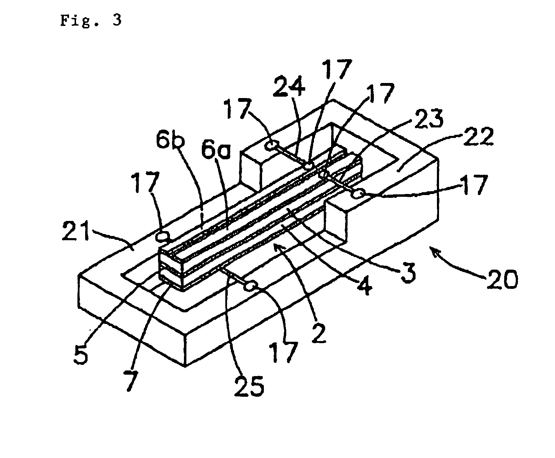

A second embodiment of the present invention will now be explained with reference to Fig. 3. Elements identical or similar to those of the first embodiment are designated by like reference numerals, and an explanation thereof will thus be omitted.

Referring to Fig. 3, a frame 20 is disposed to surround the lateral surfaces of the vibrator 2. A step 22 is further provided forming part of the top surface 21 of the frame 20. First, second and third support pins 23, 24 and 25 for supporting the vibrator 2 are formed linearly. Among these support pins 23, 24 and 25, the first support pin 23 is fixed at one end to the vicinity of the node on the divided electrode 6a by, for example, solder 17, while the second support pin 24 is bonded at one end to the vicinity of the node on the divided electrode 6b by, for example, solder 17. Further, the third support pin 25 is secured to the vicinity of the node on the common electrode 7 of the vibrator 2 by means such as solder 17. Then, the other ends of the first and second support pins 23 and 24 are fixed to the step 22 of the frame 20 by means such as soldering, while both ends of the third support pin 25 are bonded to the top surface 21 of the frame 20 by means such as soldering. Accordingly, the vibrator 2 can be held in a hollow in the frame 20.

In the vibration gyroscope constructed as described above, the first and second support pins 23 and 24 are used to establish electrical connection of the divided electrodes 6a and 6b to external circuits. Accordingly, in this embodiment, as well as in the first embodiment, the provision of leads for the divided electrodes 6a and 6b is unnecessary. Thus, the number of parts can be decreased, thereby simplifying the assembly operation.

Additionally, if an elastic material, such as silicon resin (unillustrated), is applied to the solder 17 used for fixing the support pins 23, 24 and 25 to the vibrator 2 and to the frame 20, it can absorb vibrations of the vibrator 2. This can suppress propagation of the vibrations, which is referred to as "vibration leakage", to the frame 20 via the support pins 23, 24 and 25, thereby stabilizing the vibrations of the vibrator 2.

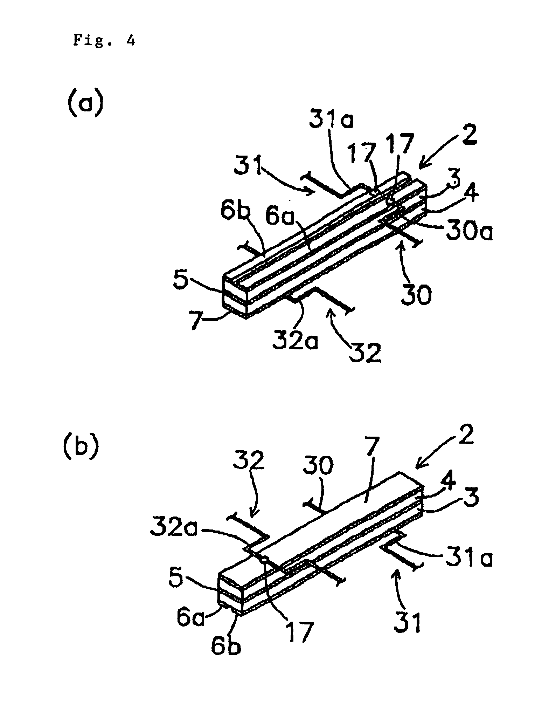

A third embodiment of the present invention will now be described while referring to Fig. 4. Elements identical or similar to those of the first embodiment are designated by like reference numerals, and an explanation thereof will thus be omitted.

According to a vibrating gyroscope of this embodiment shown in Figs. 4A and 4B, first, second and third support pins 30, 31 and 32, formed by molding metal, are used as support members for the vibrator 2. The first and second support pins 30 and 31 are provided with crank-shaped bent portions 30a and 31a, respectively. The first support pin 30 is fixed at one end to the vicinity of the node on the divided electrode 6a of the vibrator 2 by, for example, solder 17, while the second support pin 31 is attached at one end to the vicinity of the node on the divided electrode 6b by, for example, solder 17. The bent portions 30a and 31a of the first and second support pins 30 and 31 are bent in directions parallel to the main surface of the first piezoelectric substrate 3 of the vibrator 2. In contrast, the third support pin 32 is provided with a portion 32a which is bent generally in a "U" shape in directions parallel to the main surface of the second piezoelectric substrate 4 of the vibrator 2. The intermediate section of the bent portion 32a is attached to the vicinity of the node on the common electrode 7 by means such as solder 17. Then, the support pins 30, 31 and 32 are securely mounted on a substrate or fixed to a frame, though not shown, in a manner similar to the first and second embodiments. Thus, the vibrator 2 can be held in a hollow in the frame or be supported while floating above the substrate.

In the vibrating gyroscope constructed as noted above, the divided electrodes 6a and 6b are electrically connected to external circuits, such as the oscillation circuit 10 and the differential amplifying circuit 15, through the first and second support pins 30 and 31. Accordingly, it is not necessary to provide leads for the divided electrodes 6a and 6b, thereby decreasing the number of parts and further facilitating the assembly operation.

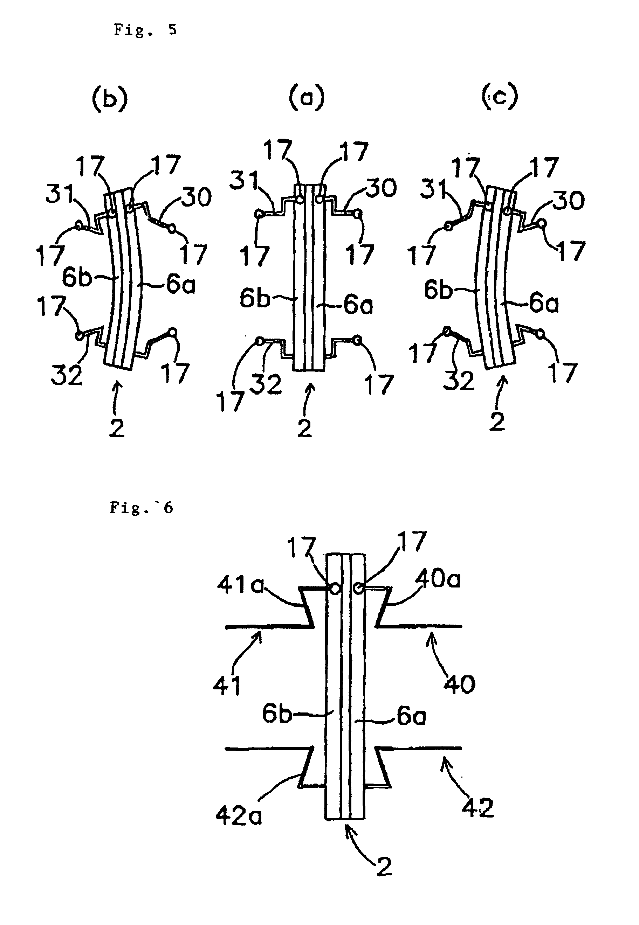

Moreover, since the support pins 30 through 32 are provided with the bent portions 30a through 32a, respectively, they can elastically support the vibrator 2. More specifically, the pins 30 through 32 remain unchanged when the vibrator 2 is not vibrating, as shown in Fig. 5A. However, when the vibrator 2 vibrates in the leftward and rightward directions orthogonal to the longitudinal direction of the vibrator 2, as illustrated in Figs. 5B and 5C, the pins 30 through 32 are deformed in response to the vibrations. Hence, the vibrations of the vibrator 2 can be stabilized without being restricted by the support pins 30 through 32. Additionally, if an elastic material, such as silicon resin (not shown), is applied to the solder 17 employed for bonding the support pins 30 through 32 to the vibrator 2 and to a substrate or a frame, the elastic material can absorb the vibrations of the vibrator 2. Thus, what is referred to as "vibration leakage" can be inhibited, thereby further stabilizing the vibrations of the vibrator 2.

The third embodiment has been explained in which the bent portions provided for the support pins project in directions parallel to the main surfaces of the piezoelectric substrates for use in the vibrator. This is not, however, exclusive, and the bent portions may project in any direction.

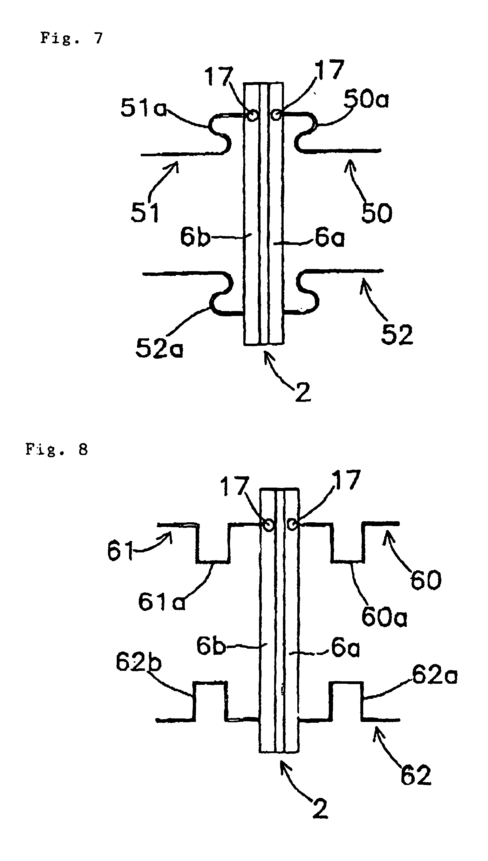

Moreover, although in the third embodiment the support pins provided with crank-shaped or "U"-shaped bent portions are used, they may be formed in other shapes, such as support pins 40, 41 and 42 having acute-angled bent portions 40a, 41a and 42a, as illustrated in Fig. 6, or support pins 50, 51 and 52 provided with generally arch-like bent portions 50a, 51a and 52a, as shown in Fig. 7. In this case, advantages presented by the third embodiment can be obtained.

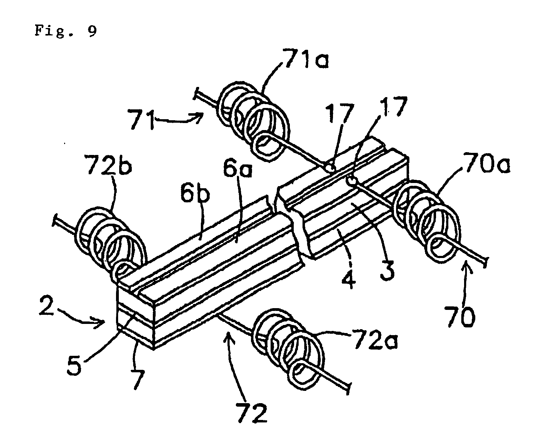

Further, the third embodiment has been explained in which the bent portions of the first and second support pins are crank-shaped, and the bent portion provided for the third support pin is formed in a "U" shape, i.e., the individual support pins are formed in different shapes. However, the bent portions may be formed in the same shape. More specifically, for example, as shown in Fig. 8, "U"-shaped bent portions 60a and 61a may be respectively provided for support pins 60 and 61, which are respectively attached to the divided electrodes 6a and 6b of the vibrator 2. At the same time, "U"-shaped bent portions 62a and 62b may also be provided for a support pin 62, which is bonded to the common electrode 7. Alternatively, as illustrated in Fig. 9, support pins 70 and 71 may have coil-like bent portions 70a and 71a, while a support pin 72 may also be provided with coil-like bent portions 72a and 72b.

As is seen from the foregoing description, the vibrating gyroscope of the present invention offers the following advantages.

Support pins are used to establish electrical connection of the divided electrodes of the vibrator with external circuits, which eliminates the need for providing leads for the divided electrodes. This can decrease the number of parts and further enhances simplicity of the assembly operation.

Additionally, the support pins, which are provided with the bent portions, can be deformed in response to vibrations of the vibrator occurring in directions orthogonal to the longitudinal direction of the vibrator. Thus, the vibrations of the vibrator can be stabilized without being restricted by the support pins.
Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. A vibrating gyroscope (1) comprising:
a vibrator (2) including a first piezoelectric substrate (3) polarized in the thickness direction of said substrate (3), a second piezoelectric substrate (4) laminated on said first piezoelectric substrate (3) and polarized in a direction opposite to the direction in which said first piezoelectric substrate (3) is polarized, two divided electrodes (6a, 6b) formed on the main surface of said first piezoelectric substrate (3), and a common electrode (7) formed on the main surface of said second piezoelectric substrate (4); and
first, second and third support pins (8, 9, 10; 23, 24, 25; 30, 31, 32; 40, 41, 42; 50, 51, 52; 60, 61, 62; 70, 71, 72) for supporting said vibrator (2), wherein said first support pin (8; 23; 30; 40; 50; 60; 70) is fixed to one of said two divided electrodes (6a), while said second support pin (9; 24; 31; 41; 51; 61; 71) is fixed to the other divided electrode (6b), and said third support pin (10; 25; 32; 42; 52; 62; 72) is fixed to said common electrode (7).

2. A vibrating gyroscope (1) according to claim 1, wherein said first, second and third support pins are each provided with a bent portion.

3. A vibrating gyroscope (1) accoding to claim 2, where each bent portion forms a substantially right angle bend.

4. A vibrating gyroscope (1) according to claim 2 where each bent portion essentially forms an acute angle bend.

5. A vibrating gyroscope (1) according to claim 2, where each bent portion essentially forms a curved bend.

6. A vibrating gyroscope (1) according to claim 1, wherein said first, second and third support pins are each provided with a plurality of bent portions, each of which forms a substantially right angle bend.

7. A vibrating gyroscope (1) according to claim 1, wherein said first, second and third support beams are formed in a coil-like shape.

8. A vibrating gyroscope (1) according to claim 1, wherein said first and second support beams are bent in directions parallel to said main surface of said first piezoelectric substrate (3) and wherein said third support pin is bent generally in a U-shape in a direction parallel to said main surface of said second piezoelectric substrate (4).

9. A vibrating gyroscope (1) comprising:
a piezoelectric vibrator (2);
exactly three support pins (8, 9, 10; 23, 24, 25; 30, 31, 32; 40, 41, 42; 50, 51, 52; 60, 61, 61; 70, 71, 72) for supporting said vibrator (72), including a first, a second and a third support pin;
drive means (100) connected to said first, second and third support pins for applying driving signals to said vibrator (2); and
detection means (15) connected to said first and second support pins for detecting signals from said vibrator (2).

10. A vibrating gyroscope (1) comprising:
a piezoelectric vibrator (2) ;
exactly three support pins (8, 9, 10; 23, 24, 25; 30, 31, 32; 40, 41, 42; 50, 51, 52; 60, 61, 62; 70, 71, 72) for supporting said vibrator (2), including a first, a second and a third support pin;
an oscillation circuit (100) connected to said first and second support pins (8, 9, 10; 23, 24, 25; 30, 31, 32; 40, 41, 42; 50, 51, 52; 60, 61, 62; 70, 71) for applying driving signals to said vibrator (2); and
a differential amplifying circuit (15) connected to said first and second support pins (8, 9, 10; 23, 24, 25; 30, 31, 32; 40, 41, 42; 50, 51, 52; 60, 61, 62; 70, 71) for detecting signals from said vibrator (2).

11. A vibrator gyroscope (1) according to claim 10, wherein said vibrator (2) includes a first piezoelectric substrate (3) polarized in the thickness direction of said substrate (3), a second piezoelectric substrate (4) laminated on said first piezoelectric substrate (3) and polarized in a direction opposite to the direction in which said first piezoelectric subtrate (3) is polarized, two divided electrodes (6a, 6b) formed on the main surface of said first piezoelectric substrate (3), and a common electrode (7) formed on the main surface of said second piezoelectric substrate (3).

12. A vibrating gyroscope (1) according to claim 11, wherein said first support pin (8, 9, 10; 23, 24, 25; 30, 31, 32; 40, 41, 42; 50, 51, 52; 60, 61, 62; 70) is fixed to one of said two divided electrodes (6a, 6b), while said second support (9, 24; 31; 41; 51; 61; 71) pin is fixed to the other divided electrode (6b), and said third support pin (10; 23, 24, 25; 30, 31, 32; 40, 41, 42; 50, 51, 52; 60, 61, 62; 70, 71, 72) is fixed to said common electrode (7).

13. A vibrating gyroscope (1) according to claim 1, wherein said first, second and third support pins are each provided with a bent portion.

14. A vibrating gyroscope (1) according to one of claims 1 to 8, comprising:
a frame (20) having a main portion and a stepped portion (22), wherein said vibrator (2) is disposed within said frame (20), and
wherein said first support pin (23) is connected between a first side of said stepped portion (22) and said one divided electrode (6a), said second support pin (24) is connected between said other divided electrode (6b) and a second side of said stepped portion (22) opposite to said first side, and said third support pin (25) has opposed ends connected to opposite sides of said main portion of said frame (20) and has an intermediate portion connected to said common electrode (7).

## Patentansprüche

1. Ein Vibrationsgyroskop (1), das folgende Merkmale umfaßt:
einen Vibrator (2), der ein erstes piezoelektrisches Substrat (3), das in der Dickerichtung des Substrats (3) polarisiert ist, ein zweites piezoelektrisches Substrat (4), das auf dem ersten piezoelektrischen Substrat (3) laminiert ist und in einer Richtung entgegengesetzt zu der Richtung, in der das erste piezoelektrische Substrat (3) polarisiert ist, polarisiert ist, zwei geteilte Elektroden (6a, 6b), die auf der Hauptoberfläche des ersten piezoelektrischen Substrats (3) gebildet sind, und eine gemeinsame Elektrode (7) umfaßt, die auf der Hauptoberfläche des zweiten piezoelektrischen Substrats (4) gebildet ist; und
einen ersten, zweiten und dritten Tragestift (8, 9, 10; 23, 24, 25; 30, 31, 32; 40, 41, 42; 50, 51, 52; 60, 61, 62; 70, 71, 72) zum Tragen des Vibratos (2), wobei der erste Tragestift (8; 23; 30; 40; 50; 60; 70) an einer der beiden geteilten Elektroden (6a) befestigt ist, während der zweite Tragestift (9; 24; 31; 41; 51; 61; 71) an der anderen geteilten Elektrode (6b) befestigt ist, und der dritte Tragestift (10; 25; 32; 42; 52; 62; 72) an der gemeinsamen Elektrode (7) befestigt ist.

2. Ein Vibrationsgyroskop (1) gemäß Anspruch 1, bei dem der erste, zweite und dritte Tragestift jeweils mit einem gebogenen Abschnitt versehen sind.

3. Ein Vibrationsgyroskop (1) gemäß Anspruch 2, bei dem jeder gebogene Abschnitt eine im wesentlichen rechtwinklige Biegung bildet.

4. Ein Vibrationsgyroskop (1) gemäß Anspruch 2, bei dem jeder gebogene Abschnitt im wesentlichen eine spitzwinklige Biegung bildet.

5. Ein Vibrationsgyroskop (1) gemäß Anspruch 2, bei dem jeder gebogene Abschnitt im wesentlichen eine gebogene Biegung bildet.

6. Ein Vibrationsgyroskop (1) gemäß Anspruch 1, bei dem der erste, zweite und dritte Tragestift jeweils mit einer Mehrzahl von gebogenen Abschnitten versehen sind, von denen jede eine im wesentlichen rechtwinklige Biegung bildet.

7. Ein Vibrationsgyroskop (1) gemäß Anspruch 1, bei dem der erste, zweite und dritte Tragebalken in einer spulenartigen Form gebildet sind.

8. Ein Vibrationsgyroskop (1) gemäß Anspruch 1, bei dem der erste und der zweite Tragebalken in Richtungen parallel zu der Hauptoberfläche des ersten piezoelektrischen Substrats (3) gebogen sind, und wobei der dritte Tragestift im allgemeinen in einer U-Form gebogen ist, in einer Richtung parallel zu der Hauptoberfläche des zweiten piezoelektrischen Substrats (4).

9. Ein Vibrationsgyroskop (1), das folgende Merkmale umfaßt:
einen piezoelektrischen Vibrator (2);
genau drei Tragestifte (8, 9, 10; 23, 24, 25; 30, 31, 32; 40, 41, 42; 50, 51, 52; 60, 61, 62; 70, 71, 72) zum Tragen des Vibrators (72), die einen ersten, einen zweiten und einen dritten Tragestift umfassen;
eine Treibereinrichtung (100), die mit dem ersten, zweiten und dritten Tragestift verbunden ist, zum Anlegen von Treibersignalen an den Vibrator (2); und
eine Erfassungseinrichtung (15), die mit dem ersten und dem zweiten Tragestift verbunden ist, zum Erfassen von Signalen von dem Vibrator (2).

10. Ein Vibrationsgyroskop (1), das folgende Merkmale umfaßt:
einen piezoelektrischen Vibrator (2);
genau drei Tragestifte (8, 9, 10; 23, 24, 25; 30, 31, 32; 40, 41, 42; 50, 51, 52; 60, 61, 62; 70, 71, 72) zum Tragen des Vibrators (2), die einen ersten, einen zweiten und einen dritten Tragestift umfassen;
eine Oszillationsschaltung (100), die mit dem ersten und dem zweiten Tragestift (8, 9, 10; 23, 24, 25; 30, 31, 32; 40, 41, 42; 50, 51, 52; 60, 61, 62; 70, 71) verbunden ist, zum Anlegen von Treibersignalen an den Vibrator (2); und
eine Differenzverstärkerschaltung (15), die mit den ersten und zweiten Tragestiften (8, 9, 10; 23, 24, 25; 30, 31, 32; 40, 41, 42; 50, 51, 52; 60, 61, 62; 70, 71) verbunden ist, zum Erfassen von Signalen von dem Vibrator (2).

11. Ein Vibratorgyroskop (1) gemäß Anspruch 10, bei dem der Vibrator (2) ein erstes piezoelektrisches Substrat (3), das in der Dickerichtung des Substrats (3) polarisiert ist, ein zweites piezoelektrisches Substrat (4), das auf dem ersten piezoelektrischen Substrat (3) laminiert ist und in einer Richtung entgegengesetzt zu der Richtung, in der das erste piezoelektrische Substrat (3) polarisiert ist, polarisiert ist, zwei geteilte Elektroden (6a, 6b), die auf der Hauptoberfläche des ersten piezoelektrischen Substrats (3) gebildet sind, und eine gemeinsame Elektrode (7) umfaßt, die auf der Hauptoberfläche des zweiten piezoelektrischen Substrats (3) gebildet ist.

12. Ein Vibrationsgyroskop (1) gemäß Anspruch 11, bei dem der erste Tragestift (8, 9, 10; 23, 24, 25; 30, 31, 32; 40, 41, 42; 50, 51, 52; 60, 61, 62; 70) an einer der beiden geteilten Elektroden (6a, 6b) befestigt ist, während der zweite Tragestift (9, 24; 31; 41; 51; 61; 70) an der anderen geteilten Elektrode (6b) befestigt ist, und der dritte Tragestift (10; 23, 24, 25; 30, 31, 32; 40, 41, 42; 50, 51, 52; 60, 61, 62; 70, 71, 72) an der gemeinsamen Elektrode (7) befestigt ist.

13. Ein Vibrationsgyroskop (1) gemäß Anspruch 1, bei dem der erste, zweite und dritte Tragestift jeweils mit einem gebogenen Abschnitt versehen sind.

14. Ein Vibrationsgyroskop (1) gemäß einem der Ansprüche 1 bis 8, das folgende Merkmale umfaßt:
einem Rahmen (20) mit einem Hauptabschnitt und einem abgestuften Abschnitt (22), wobei der Vibrator (2) in dem Rahmen (20) angeordnet ist, und
wobei der erste Tragestift (23) zwischen einer ersten Seite des abgestuften Abschnitts (22) und der geteilten Elektrode (6a) verbunden ist, der zweite Tragestift (24) zwischen der anderen geteilten Elektrode (6b) und einer zweiten Seite des abgestuften Abschnitts (22), die der ersten Seite gegenüberliegt, verbunden ist, und der dritte Tragestift (25) gegenüberliegende Enden aufweist, die mit gegenüberliegenden Seiten des Hauptabschnitts des Rahmens (20) verbunden sind, und einen Zwischenabschnitt aufweist, der mit der gemeinsamen Elektrode (7) verbunden ist.

## Revendications

1. Gyroscope vibrant (1) comprenant :
un vibreur (2) comprenant un premier substrat piézo-électrique (3) polarisé dans la direction de l'épaisseur dudit substrat (3), un deuxième substrat piézo-électrique (4) laminé sur ledit premier substrat piézo-électrique (3) et polarisé dans une direction opposée à la direction suivant laquelle ledit premier substrat piézo-électrique (3) est polarisé, deux électrodes divisées (6a, 6b) formées sur la surface principale dudit premier substrat piézo-électrique (3) et une électrode commune (7) formée sur la surface principale dudit deuxième substrat piézo-électrique (4) ; et
des première, deuxième et troisième broches de support (8, 9, 10 ; 23, 24, 25 ; 30, 31, 32 ; 40, 41, 42 ; 50, 51, 52 ; 60, 61, 62 ; 70, 71, 72) pour supporter ledit vibreur (2), dans lesquelles ladite première broche de support (8 ; 23 ; 30 ; 40 ; 50 ; 60 ; 70) est fixée à une desdites deux électrodes divisées (6a), alors que ladite deuxième broche de support (9 ; 24 ; 31 ; 41 ; 51 ; 61 ; 71) est fixée à l'autre électrode divisée (6b) et ladite troisième broche de support (10 ; 25 ; 32 ; 42 ; 52 ; 62 ; 72) est fixée à ladite électrode commune (7).

2. Gyroscope vibrant (1) selon la revendication 1, dans lequel lesdites première, deuxième et troisième broches de support sont pourvues chacune d'une portion pliée.

3. Gyroscope vibrant (1) selon la revendication 2, dans lequel chaque portion pliée forme une pliure sensiblement à angle droit.

4. Gyroscope vibrant (1) selon la revendication 2, dans lequel chaque portion pliée forme sensiblement une pliure à angle aigu.

5. Gyroscope vibrant (1) selon la revendication 2, dans lequel chaque portion pliée forme sensiblement une pliure courbe.

6. Gyroscope vibrant (1) selon la revendication 1, dans lequel lesdites première, deuxième et troisième broches de support sont pourvues chacune d'une pluralité de portions pliées, chacune desquelles forme une pliure sensiblement à angle droit.

7. Gyroscope vibrant (1) selon la revendication 1, dans lequel lesdites première, deuxième et troisième broches de support sont formées avec un profil de type à spirale.

8. Gyroscope vibrant (1) selon la revendication 1, dans lequel lesdites première et deuxième broches de support sont pliées dans des directions parallèles à ladite surface principale dudit premier substrat piézo-électrique (3) et dans lequel ladite troisième broche de support est pliée sensiblement en forme de U dans une direction parallèle à ladite surface principale dudit deuxième substrat piézo-électrique (4).

9. Gyroscope vibrant (1) comprenant :
un vibreur piézo-électrique (2) ;
exactement trois broches de support (8, 9, 10 ; 23, 24, 25 ; 30, 31, 32 ; 40, 41, 42 ; 50, 51, 52 ; 60, 61, 62 ; 70, 71, 72) pour supporter ledit vibreur (72), comprenant une première, une deuxième et une troisième broches de support ;
des moyens de commande (100) connectés aux dites première, deuxième et troisième broches de support pour appliquer des signaux de commande audit vibreur (2) ; et
des moyens de détection (15) connectés aux dites première et deuxième broches de support pour détecter des signaux provenant dudit vibreur (2).

10. Gyroscope vibrant (1) comprenant :
un vibreur piézo-électrique (2) ;
exactement trois broches de support (8, 9, 10 ; 23, 24, 25 ; 30, 31, 32 ; 40, 41, 42 ; 50, 51, 52 ; 60, 61, 62 ; 70, 71, 72) pour supporter ledit vibreur (2), comprenant une première, une deuxième et une troisième broches de support ;
un circuit d'oscillation (100) connecté aux dites première et deuxième broches de support (8, 9, 10 ; 23, 24, 25 ; 30, 31, 32 ; 40, 41, 42 ; 50, 51, 52 ; 60, 61, 62 ; 70, 71) pour appliquer des signaux de commande audit vibreur (2) ; et
un circuit amplificateur différentiel (15) connectés aux dites première et deuxième broches de support (8, 9, 10 ; 23, 24, 25 ; 30, 31, 32 ; 40, 41, 42 ; 50, 51, 52 ; 60, 61, 62 ; 70, 71) pour détecter des signaux provenant dudit vibreur (2).

11. Gyroscope vibrant (1) selon la revendication 10, dans lequel ledit vibreur (2) comprend un premier substrat piézo-électrique (3) polarisé dans la direction de l'épaisseur dudit substrat (3), un deuxième substrat piézo-électrique (4) laminé sur ledit premier substrat piézo-électrique (3) et polarisé dans une direction opposée à la direction suivant laquelle ledit premier substrat piézo-électrique (3) est polarisé, deux électrodes divisées (6a, 6b) formées sur la surface principale dudit premier substrat piézo-électrique (3) et une électrode commune (7) formée sur la surface principale dudit deuxième substrat piézo-électrique (3).

12. Gyroscope vibrant (1) selon la revendication 11, dans lequel ladite première broche de support (8, 9, 10 ; 23, 24, 25 ; 30, 31, 32 ; 40, 41, 42 ; 50, 51, 52 ; 60, 61, 62 ; 70) est fixée à une desdites deux électrodes divisées (6a, 6b), alors que ladite deuxième broche de support (9 ; 24 ; 31 ; 41 ; 51 ; 61 ; 71) est fixée à l'autre électrode divisée (6b) et ladite troisième broche de support (10 ; 23, 24, 25 ; 30, 31, 32 ; 40, 41, 42 ; 50, 51, 52 ; 60, 61, 62 ; 70, 71, 72) est fixée à ladite électrode commune (7).

13. Gyroscope vibrant (1) selon la revendication 1, dans lequel lesdites première, deuxième et troisième broches de support sont pourvues chacune d'une portion pliée.

14. Gyroscope vibrant (1) selon une des revendications 1 à 8, comprenant :
un châssis (20) ayant une partie principale et une partie en gradins (22), dans lequel ledit vibreur (2) est disposé à l'intérieur dudit châssis (20), et
dans lequel ladite première broche de support (23) est connectée entre un premier côté de ladite partie en gradins (22) et ladite une électrode divisée (6a), ladite deuxième broche de support (24) est connectée entre ladite autre électrode divisée (6b) un deuxième côté de ladite partie en gradins (22) et ladite troisième broche de support (25) a des extrémités opposées connectées à des côtés opposés de ladite partie principale dudit châssis (20) et a une portion intermédiaire connectée à ladite électrode commune (7).
